(19) Europäisches Patentamt

European Patent Office

Office européen des brevets

(11) EP 0 813 744 B1

(12) EUROPÄISCHE PATENTSCHRIFT

(45) Veröffentlichungstag und Bekanntmachung des Hinweises auf die Patenterteilung:
21.07.1999 Patentblatt 1999/29

(21) Anmeldenummer: 96904084.9

(22) Anmeldetag: 29.02.1996

(51) Int Cl.⁶: **H01H 29/06**, G01C 9/18

(86) Internationale Anmeldenummer:
PCT/EP96/00824

(87) Internationale Veröffentlichungsnummer:
WO 96/27892 (12.09.1996 Gazette 1996/41)

(54) **IM TEMPERATURBEREICH VON WENIGER ALS -50 C BIS GRÖSSER ALS 160 C ELEKTRISCH LEITFÄHIGE FLÜSSIGKEIT**

ELECTROCONDUCTIVE LIQUID IN A TEMPERATURE RANGE FROM LESS THAN -50 C TO MORE THAN 160 C

LIQUIDE ELECTROCONDUCTEUR DANS UNE PLAGE DE TEMPERATURES COMPRISE ENTRE MOINS DE -50 C ET PLUS DE 160 C

(84) Benannte Vertragsstaaten:
**BE DE ES FR GB IT PT SE**

(30) Priorität: 04.03.1995 DE 19507610

(43) Veröffentlichungstag der Anmeldung:
29.12.1997 Patentblatt 1997/52

(73) Patentinhaber:
• **Altmeier, Patrick**
  **66822 Lebach (DE)**
• **Konrad, Andreas**
  **66440 Blieskastel-Mimbach (DE)**

(72) Erfinder:
• **Altmeier, Patrick**
  **66822 Lebach (DE)**
• **Konrad, Andreas**
  **66440 Blieskastel-Mimbach (DE)**

(56) Entgegenhaltungen:
WO-A-93/26025          US-A- 2 852 646
US-A- 4 975 806

**Beschreibung**

Hintergrund

Meßgrößen können mit Hilfe von elektrischem Strom erfaßt werden, wenn die eingesetzten Sensoren ihren Widerstand oder ihre Kapazität bei Veränderung der Meßgröße ebenfalls verändern. Eine Voraussetzung dafür ist, daß die eingesetzten Sensormaterialien über den gesamten Anwendungsbereich im Falle eines resistiven Sensors einen endlichen ohmschen Widerstand besitzen, oder im Falle eines kapazitiven Sensors eine nicht gegen Null gehende Kapazität.

Ein einfacher Temperatursensor läßt sich aus einem Metalldraht realisieren. Kennt man für einen bestimmten Tempraturbereich dessen ohmschen Widerstand, kann man mittels der Temperatur-Widerstandskennlinie durch die Messung des ohmschen Widerstandes die Temperatur ermitteln.

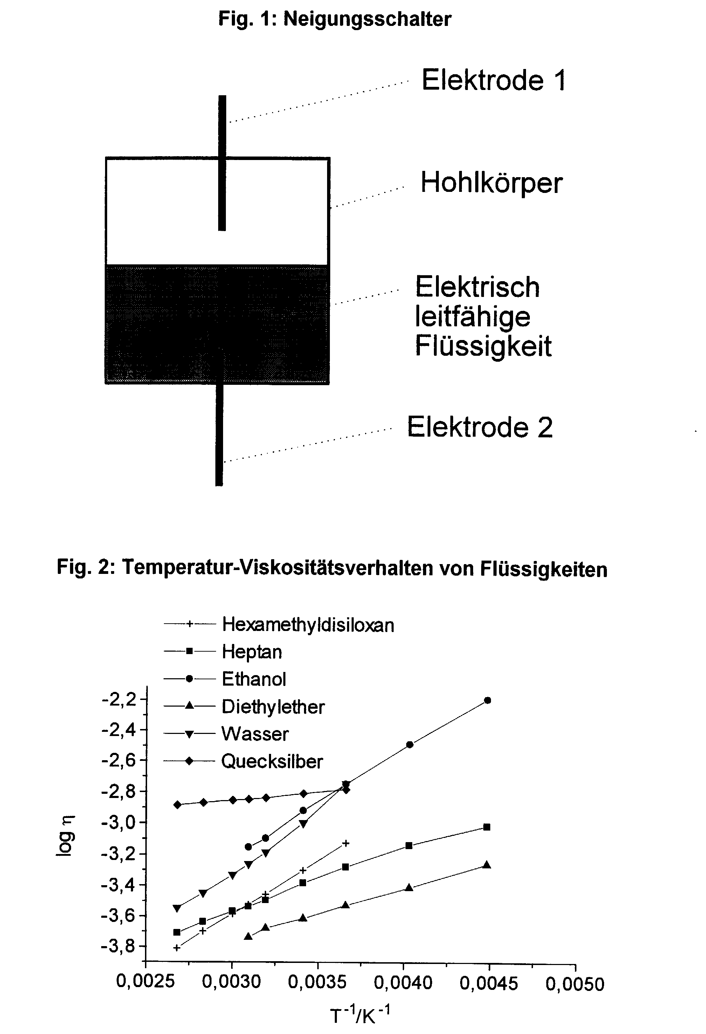

Soll die Neigung eines Objektes erfaßt werden kann als elektrisch leitfähiges Medium eine Flüssigkeit verwendet werden. In Sensoren, die als teilweise gefüllte Hohlkörper ausgeführt sind, beginnt eine darin befindliche Flüssigkeit z.B. bei Lageveränderungen des Objektes an dem der Sensor befestigt ist, bedingt durch die Schwerkraft, zu fließen und sammelt sich an der tiefsten Stelle des Hohlkörpers. Eine einfache Variante für einen Neigungssensor ist ein Schalter nach Fig. 1, der beim Verkippen um etwa 90 ° zwischen den Elektroden 1 und 2 leitfähig wird.

Mit komplizierter werdenen Aufbauten und Meßanforderungen steigen auch die Anforderungen an die elektrisch leitfähige Flüssigkeit. Für Neigungssensoren mit denen der Verkippungswinkel mit hoher Zuverlässigkeit, guter Reproduzierbarkeit und hoher Auflösung bestimmt werden soll, muß die elektrisch leitfähige Flüssigkeit über den gesamten Anwendungstemperaturbereich ein notwendiges Anforderungsprofil bezüglich Leitfähigkeit, Dampfdruck, Viskosität und Oberflächenspannung erfüllen. Desweiteren sind z.T. Anforderungen wie geringe Korrosivität, geringe Toxizität und geringe Kosten zu erfüllen.

In der Literatur sind sind die Meßprinzipien solcher resistiv arbeitender Neigungssensoren beschrieben (Lit.: M. Fidelak, Sensor Report, 7 (1992), 5, S. 34-36). Der Temperaturbereich der Einsetzbarkeit, das Auflösungsvermögen, die Anforderungen an den Hohlkörper und die Auswerteelektronik werden wesentlich durch die Eigenschaften der verwendeten leitfähigen Flüssigkeit bestimmt.

Stand der Technik

Zur Messung von Neigungen, Schwingungen, Beschleunigungen und Füllständen kommen Sensoren zum Einsatz, die teilweise mit elektrisch leitfähigen Flüssigkeiten befüllt sind.

Beispiele für Sensoren, bei denen eine Neigung des Sensors durch die spezielle Geometrie von Elektroden und Sensor an die Auswerteelektronik ein Signal liefert, daß mit dem Neigungswinkel des Sensors korreliert sind in WO93/26025, die die Basis für den Oberbegriff des Anspruchs 1 bildet, aufgeführt.

Maßgeblich entscheidend für den Arbeitsbereich, die Einsetzbarkeit und die Eigenschaften solcher Sensoren sind die eingesetzten elektrisch leitfähigen Flüssigkeiten.

Elektrisch leitfähige Flüssigkeiten im Raumtemperaturbereich sind:

- Quecksilber
- Wäßrige Salzlösungen, auch Säuren und Laugen
- Sonstige Lösemittel, in denen dissoziierte Teilchen vorliegen

Während es sich beim Quecksilber um metallische Leitung handelt, funktioniert der Ladungstransport in den anderen Fällen durch solvatisierte Ionen. Die Anwendung von Quecksilber als elektrisch leitfähige Flüssigkeit ist mit wesentlichen Nachteilen verbunden. Quecksilber ist toxisch und kumuliert im menschlichen Körper. Die Herstellung, Verwendung und Entsorgung von Quecksilber enthaltenden Bauteilen stellt hohe Anforderungen an Arbeitsund Umweltschutz. Quecksilber ist außerdem teuer und wegen seines Schmelzpunktes von -38 °C spätestens ab dieser Temperatur nicht mehr einsetzbar. Die Verwendung von Säuren und Laugen als elektrisch leitfähige Flüssigkeiten ist ebenfalls nur eingeschränkt möglich. Zum einen sind sie korrosiv und ätzend, desweiteren ist der Temperaturbereich der Einsetzbarkeit wegen relativ hohen Schmelzpunkten nach unten hin limitiert. Reine Schwefelsäure erstarrt bei -15 °C. Auch verdünnte wäßrige Säuren haben im allgemeinen für den Anwendungsfall zu hohe Schmelzpunkte.

Auch die Verwendung wäßriger Salzlösungen ist limitiert: wegen des Siedepunkts des Lösemittels Wassers von 100 °C ist hier im allgemeinen eine obere Grenze für Anwendungen oder aber die Meßvorrichtung müßte als Druckgefäß ausgeführt werden. Daran ändert auch die Siedepunktserhöhung durch die Zugabe von Salzen wenig.

Aus der Literatur (Lit.: VDI-Wärmeatlas, Berechnungsblätter für den Wärmeübergang, VDI-Verlag, Düsseldorf, 5. Auflage, 1988) sind wäßrige Salzlösungen als Kältemittel bekannt.

Um jedoch tiefe Temperaturen im flüssigen Zustand zu erreichen, sind hohe Salzkonzentrationen erforderlich:

so muß 29,9 % CaCl$_2$ Wasser zugegeben werdem, um einen Schmelzpunkt von -55 °C zu erhalten. Um - 40 °C zu erreichen sind etwa 28 % CaCl$_2$ zuzugeben. Solche konzentrierten Salzlösungen sind oftmals sehr korrosiv, desweiteren ist ihre spezifische elektrische Leitfähigkeit sehr hoch. Geringe Leitfähigkeiten sind nicht einstellbar, da bei Verringerung des Salzgehaltes, und damit der Leitfähigkeit, der Schmelzpunkt der Lösung ansteigt.

Um in organischen Lösemitteln eine elektrische Leitfähigkeit zu erreichen, müssen ionogene Substanzen gelöst und dissoziiert werden. Möglichkeiten, hier elektrisch leitfähige Flüssigkeiten herzustellen gibt es viele; trivial wäre z.B. eine methanolische Li-Salzlösung. Diese wäre aber als Sensorflüssigkeit nur beschränkt einsetzbar, da Methanol giftig ist und einen Flammpunkt von nur 11°C besitzt. Da Methanol einen Schmelzpunkt von -98 °C hat, wäre der prinzipielle Einsatz der Lösung bei tiefen Temperaturen unproblematisch. Methanol siedet jedoch bei 65 °C. Damit wäre für die Messung bei z.B. 85 °C ein Druckbehälter erforderlich. Technisch übliche Neigungssensoren die im Temperaturbereich zwischen ca. -30 und ca. 90 °C funktionieren und Flüssigkeiten dieser Art enthalten sind deshalb bisher als relativ aufwendige druckfeste Glaskörper oder ähnliches ausgeführt. Auch die elektrischen Ableitungen der Elektroden müssen druckfest und dicht in das Bauteil integriert werden. Anforderungen an langfristig stabile Sensoren (geringe Leckraten) werden somit sehr hoch.

In US 4975806 sind Elektrolyte beschrieben, die bezogen auf ihre flüssigen Bestandteile, zu mehr als 90 % aus aprotischen Solventien wie Formamid (Schmelzpunkt 2°C), DMF (Flammpunkt 59 °C, Siedep. 153 °C), N-Methylformamid (Schmelzpunkt -3 °C), Dimethylacetamid (Schmelzp. -20 °C, Flammp. 70 °C), N-Methyl-2-pyrrolidon (Schmelzpunkt -24 °C), Nethyl-2-pyrrolidon, Diethylenglykolmonomethylether (Flammpunkt 87 °C), Diethylenglykoldimethylether (Flammpunkt 58 °C), Ethylenglykolmonomethylether (Kp. 124 °C, Flammpunkt 46 °C), Ethylenglykoldimethylether (Flammpunkt 1 °C, Siedpunkt 84 °C), Dimethylsulfoxid (Schmelzpunkt 18 °C), Propylencarbonat (Schmelzpunkt 48 °C), 4-Butyrolacton (Schmelzpunkt -44 °C) und Mischungen davon bestehen. Leitsalz im Elektrolyt ist Ammoniumborodisalicylat zu mindestens 2 %.

Nachteil der aufgeführten Lösemittel ist, daß alle entweder Flammpunkte unter 90 °C oder aber Schmelzpunkte z.T. wesentlich über -50 °C besitzen. Die enstehenden Elektrolyte genügen somit nicht erhöhten Anforderungen an den Flammpunkt und gleichzeitiger Eignung für einem Einsatzbereich von < -50 bis >160 °C. Weitere Probleme sind das Ausfallen von Leitsalzen bei tiefen Temperaturen oder große Änderungen der Leitfähigkeit und der Viskosität über den Anwendungstemperaturbereich.

In US 4048118 sind elektrisch leitfähige Flüssigkeiten aus Mischungen eines Alkalimetallsalzes einer organischen Säure, organischen Lösemitteln und Polyalkyleniminsalzen als antistatische Mischungen organischer Lösemittel beschrieben. Bei n-Hexan werden spezifische elektrische Widerstände von 10$^{10}$ Ohm cm (= 10$^{-4}$ µS cm$^{-1}$) erreicht. Die erreichbaren Leitfähigkeiten sind für den Einsatz in Sensoren im allgemeinen zu niedrig. Desweitern besitzt Hexan einen Flammpunkt von -22 °C und birgt somit ein hohes Entzündungsrisiko bei Sensorleakagen bei der Verwendung in elektrischen Schaltkreisen, insbesondere Relaisschaltungen.

In DE 4244724 und DE 4218560 werden Flüssigkeitsneigungsschalter beschrieben, wobei die Flüssigkeiten aus Alkoholen (Methanol, Ethanol, Propanol) und darin gelösten Salzen bestehen. Propanol besitzt von den beschriebenen Alkoholen den höchsten Flammpunkt (12 °C). Somit sind diese Lösungen, wenn höhere Flammpunkte gefordert sind, nicht einsetzbar. In US 2852646 sind Neigungssensoren und Flüssigkeiten dafür beschrieben, wobei die elektrisch leitfähigen Flüssigkeiten aus Lösungen eines Alkalijodid in Propylenglykolmonomethylether (Siedep. 120°C; Flammpunkt 38 °C, Dampfdruck 20 °C 10,8 hPa), Ethylenglykolmonomethylether (Siedep. 124 °C, Flammpunkt 46 °C, Dampfdruck 20 °C 11hPa) bzw. Mischungen davon bestehen. Diesen Lösungen kann auch Methanol (Kp 65 °C, Flammpunkt 11 °C, Dampfdruck 20°C 128 hPa) beigefügt sein.

Diese Mischungen weisen zwar niedrige Änderungen des elektrischen Widerstandes über den Einsatztemperaturbereich (-54 bis +125 °C) auf, sind aber nur erfindungsgemäß nur in druckfesten Sensoren einsetzbar (5 bar), die Komponenten besitzen niedrige Siede- und Flammpunkte.

In US 2387313 sind Neigungssensoren und Elektrolyte dafür beschrieben. Die Flüssigkeiten bestehen dabei aus Mischungen von Ethanol (ca. 80-95 %) und Wasser und enthalten als Leitsalz Alkalimetalljodide. Diese Mischungen sind im Temperaturbereich von -65 bis + 80 °C einsetzbar. Für höhere Einsatztemperaturen sind druckfeste Hohlkörper erforderlich. Ebenso besitzen die Mischungen niedrige Flammpunkte.

In US 2927987 sind Neigungssensoren beschrieben, die als Sensorflüssigkeit Mischungen aus Allylalkohol, Methanol, Wasser und Natriumjodid enthalten. Auch diese Mischungen sind vom Temperaturbereich des Einsatzes aufgrund der niedrigen Siedepunkte limitiert und besitzen niedrige Flammpunkte.

In DE 3611123 werden neben anderen Solventien Ether aufgeführt, die als Solventien für anorgansiche Salze in Battedeelektrolyten verwendet werden. Wie Dimethylether, Diethylether, Diisopropylether, n- Butylether, Diethylenglykoldimethylether, Ethylenglykoldimethylether, cyclische Ether wie THF, Dioxan und Tetrahydropyran. Alle diese Ether besitzen niedrige Flammpunkte (< 50 °C).

In DE 9017431 sind Sensoren zur Erfassung der Beschleunigung bzw. Neigung beschrieben, die als Elektrolyt ein Lösungsmittel, insbesondere DMF, Butyrolacton, Dimethylsulfid, eine Flüssigkeit auf Glykolbasis, eine Mischung davon oder verdünnte Schwefelsäure enthalten. Dimethylsulfid besitzt einen Flammpunkt von - 37 °C, verdünnte Schwefelsäure ist korrosiv und hat einen zu hohen Schmelzpunkt für tieftemperaturgeeignete Sensoren. Mischungen mit Glykol als Basis für eine Sensorflüssigkeit (z.B. handelsüblicher Frostschutz 52 % in Wasser, Schmelzpunkt -40 °C) zeigen im Bereich unter - 20 °C erhebliche Zunahmen der Viskosität (Lit.: VDI-Wärmeatlas, Berechnungsblätter für den Wärmeübergang, VDI-Verlag, Düsseldorf, 5. Auflage, 1988, Dd15). Dadurch nimmt die elektrische Leitfähigkeit erheblich ab und solche Mischungen sind nicht für die Messung bei tiefen Temperaturen geeignet.

In CH 586388 sind Flüssigkeiten für Neigungssensoren auf der Basis von Hydrazinmonohydrat (Siedepunkt 118-122 °C) beschrieben. Aufgrund des Siedpunktes ist hier der Meßbereich nach oben limitiert bzw. es ist eine druckdichte Meßanordnung erforderlich.

Aufgabe der Erfindung

Von einer insbesondere in der Sensortechnik anwendbaren elektrisch leitfähigen Flüssigkeit müssen verschiedenste Anforderungen gleichzeitig erfüllt werden.

Ziel der vorliegenden Erfindung ist deshalb eine Flüssigkeit maßzuschneidern, die allen diesen Ansprüchen genügt.

Folgende Anforderungen müssen von einer geeigneten Flüssigkeit erfüllt werden:

* elektrische Leitfähigkeit im Temperaturbereich von <-50 und >160 °C
* Schmelzpunkte < -50 °C und Siedpunkte > 160 °C
* Leitfähigkeit im weitem Bereich variierbar (Anpassung an Elektronik)
* langfristig stabiles System mit gleichbleibenden Eigenschaften
* Flüssigkeit sollte möglichst wenig toxisch und ökologisch unproblematisch sein, einfache Entsorgung
* Flüssigkeit sollte hohen Flammpunkt ( >110°C) besitzen (Einbau in Relaisschaltungen)
* geringe Viskosität auch bei tiefen Temperaturen, da diese das Auflösungsvermögen eines Neigungssensors sehr stark bestimmt
* geringe Oberfächenspannung (sollte möglichst glatte Oberfäche ausbilden), um immer definierte Volumen abhängig von der Füllhöhe zu haben und um die Benetzung eines Hohlkörpers nach Abb.1 mit Kondensat im nicht mit Flüssigkeit gefüllten Bereich möglichst niedrig zu halten und desweiteren eine Bauteileminiaturisierung zu ermöglichen
* nicht korrosiv
* wenig flüchtig (geringer Dampfdruck), hoher Siedepunkt um Anforderungen an Konstruktion des Sensorgehäuses und Dichtung der Elektrodendurchführung zu minimieren
* geringe Penetration durch Kunststoffe, um Glasgefäße als Hohlkörper verzichtbar zu machen und Fertigung mit billigen Massenverfahren (Spritzguß) zu ermöglichen (vgl. hoher Siepunkt)
* die Änderung der spezifischen Leitfähigkeit im Einsatztemperaturberiech sollte möglichst gering sein (Reduzierung des Aufwandes bei der Sensorelektronik)
* es sollten keine Unstetigkeiten im Temperatur-Leiffähigkeitsverhalten auftreten
* Flüssigkeit soll kostengünstig und technisch verfügbar sein
* möglichst geringe Wechselwirkungen mit üblichen Elektrodenmaterialien
* Flüssigkeiten müssen elektrochemisch stabil sein (gegen anodische Oxidation und kathodische Reduktion, da auch bei Wechselstrommessungen ein gewisser Gleichstromanteil immer vorhanden ist)

Erfindungsgemäß wird dieses Anforderungsprofil, ohne den Umfang der Erfindung einschränken zu wollen, durch eine Lösung eines Salzes in Triethylenglykoldimethylether (einem linear gebauten organischen aprotischen Lösemittel) abgedeckt, zu der Alkohole in einer Menge zusetzt sind, die geeignet ist, die Ionen des Salzes zu solvatisieren.

Es wurde gefunden, daß lineare organische Moleküle, aufgrund ihres geringen Temperatur-Widerstandskoeffizienten als Lösemittel besonders geeignet sind: da die molare Leitfähigkeit bei unendlicher Verdünnung und vollständiger Dissoziation in erster Linie durch die Viskosität des Elektrolyten bestimmt wird (parat: Lexikon Elektrochemie, S.146) waren Substanzen zu finden, die möglichst geringe Änderungen der Viskosität mit der Temperatur aufweisen. In Fig. 2 sind für Beispielsubstanzen die Änderungen des log der dynamischen Viskosität gegen den Kehrwert der absoluten Temperatur aufgetragen.

Je flacher der Kurvenverlauf ist, um so weniger ändert sich die Viskosität mit der Temperatur.

Wasser und Ethanol (im allgememeinen OH-funktionelle Verbindungen, protische Lösemittel) weisen große $\pi/T$ -Koeffizienten auf, bei den Siliconen sind die Koeffizienten geringer.

Am kleinsten sind die Temperatur-Viskositätsänderungen bei unverzweigten Molekülen (stäbchenförmiger Molekülbau), wie n-Alkanen oder linearen Ethern.

Geeignete Kandidaten sind daher als Lösemittelkomponente unverzweigte Moleküle ohne OH-Funtionalität wie n-Alkane, unverzweigte Ether und lineare Siliconöle. Diese Substanzen sind von sich aus nicht elektrisch leitfähig (wären aber gute Kandidaten für kapazitive Anwendungen).

Um eine elektrische Leitfähigkeit zu erreichen, müssen in der Flüssigkeit Substanzen gelöst werden, die den Ladungstransport ermöglichen. D.h. ein Leitsalz muß in der Flüssigkeit löslich sein und dissoziieren. Nach dem Coulombschen Gesetz erfolgt die Trennung in Ionen (Ladungsträger) um so besser, je größer die Dielektrizitätskonstante $\varepsilon_r$ des Lösemittels ist (z.B. Wasser $\varepsilon_r$ = 80,4 -> vollständige Dissoziation, Benzol $\varepsilon_r$ = 2,3 -> keine Ionentrennung). Bei den aufgrund ihrer $\pi/T$ - Charakteristik geeigneten Substanzen handelt es sich um aprotische Lösemittel geringer Polarität.

Die Löslichkeit typischer anorganischer Salze in diesen Solventien ist vernachlässigbar klein. Trotzdem sind oftmals quartäre Ammonium-, Phosphonium-, oder andere Onium-Salze löslich. Außerdem organisch "maskierte" Alkalimetallsalze sowie weitere, als Phasentransferkatalysatoren bekannte, Substanzen wie z.B. Kronenether.

In n-Alkanen und Siliconölen sind auch diese Substanzen, wegen der extrem niedrigen Lösemittelpolarität, nur wenig löslich. n-Alkanen und Siliconöle sind auch nur in sehr geringen Konzentrationen polare Lösemittel (z.B. Wasser oder Ethanol) zumischbar. Bei Abkühlung auf tiefe Temperaturen kommt es zur Entmischung, die Löslichkeit polarer Substanzen geht dann gegen 0 und damit auch die elektrische Leitfähigkeit dieser Mischungen.

Polarer sind unverzweigte Ether oder Polyether (z.B. Diethylether $\varepsilon_r$ = 4,38; Diethylenglykoldimethylether $\varepsilon_r$ = 7). In ihnen sind quartäre Ammoniumsalze bei Raumtemperatur löslich. Die üblichen technisch verfügbaren Monoether wie Diethylether (Kp. 34 °C, Flammp. -40°C), Dipropylether (Kp. 90 °C, Flammp. -28°C) und Dibutylether (Kp. 141 °C, Flammp. 25 °C) haben für die Anwendung in Sensorflüssigkeiten mit oben beschriebenen Anforderungsprofil zu niedrige Flamm- und Siedepunkte.

Aufgrund ihrer tiefen Schmelzpunkte, hohen Siede- und Flammpunkte und ihres guten Lösevermögens (hohe Polaritäten im vgl. zu Monoethern) sind sogenannte "Polyether" besser geeignet. Technisch verfügbare Beispielsubstanzen und deren Stoffeigenschaften sind in Tabelle 1 aufgeführt.

Den Anforderungen an den Flammpunkt (> 110 °C) genügen aus dieser Gruppe der linearen Polyether allerdings nur Substanzen aus der Gruppe der Triethylenglykolether.

Tabelle 1:

| Stoffeigenschaften ausgewählter Beispiele von Polyethern | | | | | |
|---|---|---|---|---|---|
| Substanzname | Schmelzpunkt /°C | Siedepunkt /°C | Flammpunkt /°C | Viskosität /mPas bei 20°C | Dampdruck /hPa 20°C |
| Diethylenglykoldimethylether | -68 | 162 | 58 | 1,88 | 7 |
| Diethylenglycoldiethylether | -44 | 188 | 82 | - | 0,5 |
| Diethylenglycoldibutylether | -60 | 254 | - | - | 0,01 |
| Triethylenglycoldimethylether | -46 | 216 | 111 | 3,7 | 1,2 |
| Triethylenglykolmonomethylether | -44 | 249 | 118 | - | - |
| Diethylenglycolmonobutylether | -68 | 230 | 100 | 6,16 | 0,03 |
| Diethylenglykolmonoethylether | -80 | 202 | 90 | 4,95 | 0,13 |
| Diethylenglykolmonomethylether | -65 | 194 | 87 | 3,9 | 0,24 |

In Beispiel 1 ist gezeigt, daß eine Lösung eines quartären Ammoniumsalzes in einem Polyether elektrisch leitfähig ist.

Eine Mischung nach Beispiel 1 ist jedoch nicht als elektrisch leitfähige Flüssigkeit in einem Sensor einsetzbar. Kühlt man eine Mischung nach Beispiel 1 isobar innerhalb von 20 min auf - 40 °C ab und bestimmt dabei die Leitfähigkeit als Funktion der Temperatur, nimmt bei ca. - 30 °C die Leitfähigkeit plötzlich ab (Unstetigkeit).

In der Leitfähigkeitsmeßzelle ist dabei ausgefallenes Leitsalz zu beobachten. Beim langsamen Erwärmen ist das Salz bei ca. -20 °C wieder komplett in Lösung. Die Unstetigkeit in der LF/T- Funktion ist somit desweiteren von der Erwärmungsgeschwindigkeit abhängig, da sie mit der Kinetik der Auflösung des Leitsalzes gekoppelt ist.

Dieses Problem wurde in vorliegender Erfindung vorteilhaft durch die Zugabe einer oder mehrerer Komponenten gelöst, die zur Solvatisierung des Leitsalzes dienen.

Es wurde überraschend gefunden, daß die Löslichkeit eines Salzes in aprotischen Lösemitteln bei tiefen Temperaturen stark erhöht wird, wenn man geringe Mengen einer OH-funktionellen Verbindung (Alkohol) zusetzt. Dieser Effekt wird durch Verwendung von Diolen oder Polyolen verstärkt. Es wird vermutet, daß durch diesen Zusatz die Ionen solvatisiert werden und daher das gelöste Salz erst dissoziiert. Im vorliegenden Fall handelt es sich demnach um sogenannte schwache Elektrolyte, der Dissoziationsgrad $\alpha$ ist kleiner 1. Die molare Leitfähigkeit ist somit das Produkt aus $\alpha$ und der theoretischen molaren Leitfähigkeit bei vollständiger Dissoziation.

Aufgabenstellung bei der vorliegenden Erfindung war es deshalb ein Solvatisierungshilfsmittel zu finden, das eine möglichst vollständige Dissoziation gewährleistet, somit hohe Leitfähigkeiten bei geringen Leitsalzkonzentrationen und durch die gute Dissoziation bedingt auch eine gute Löslichkeit (Löslichkeit allein reicht nicht aus, da allein dadurch noch keine elektrische Leitfähigkeit).

Entscheidend für den Grad der Dissoziation in Anionen und Kationen ist der Energieaufwand. Je kleiner dieser ist, um so vollständiger kann durch die Brownsche Molekularbewegung eine Dissoziation herbeigeführt werden. Der Energieaufwand ergibt sich aus dem Coulombschen Gesetz (Grundgesetze der Elektrostatik, P.W. Atkins Physikalische Chemie Kap 11.4) und beträgt:

$$w = - \frac{q_1 \cdot q_2}{4 \cdot \pi \cdot \varepsilon_r} \cdot \frac{1}{r} \qquad (1)$$

Aus der Formel ist ersichtlich, daß die Dissoziationsenergie um so geringer wird, je größer die $\varepsilon_r$ des Elektrolyten ist.

Erfindungsgemäß werden dehalb protische Substanzen mit großen $\varepsilon_r$ als Solvatisierungshilfe zugesetzt (Ethylenglykol $\varepsilon_r = 41,2$; Ethanol $\varepsilon_r = 24,5$; etc.). Man erhält somit Mischungen, bei denen das Leitsalz auch bei tiefen Temperaturen in Lösung bleibt.

Das Temperatur-Leiffähigkeitsverhalten einer solchen Mischung ist in Beispiel 2 angegeben. Eine solche Lösung ist von ca. -45 (Schmelzpunkt) bis ca. 200°C (Siedepunkt) als elektrisch leitfähige Flüssigkeit einsetzbar.

Die Wirkung des Solvatisierungshilfsmittels läßt sich dann wie folgt beschreiben: die polaren Moleküle lagern sich mit ihren Hydroxylgruppen in Richtung des Leitsalzes als Solvathülle um die Leitsalzmoleküle.

Die apolaren Enden des Solvatisierungsmittels zeigen in Richtung des relativ apolaren Lösemittels.

Damit wird das Leitsalz mit Solvathülle im apolaren Medium gut löslich. Durch die relativ hohen Werte der Dielektrizitätskonstante für das Leitsalzmolekül im molekularen Bereich der Solvathülle ist auch der Dissoziationsgrad und damit die molare elektrische Leitfähigkeit hoch. Das apolare Lösemittel ist quasi für das Leitsalz maskiert.

Da für die Solvathülle nur etwa 8-10 mol/mol Leitsalz notwendig sind haben diese Mischungen im Prinzip die gleichen wie oben beschriebenen vorteilhaften Eigenschaften wie die reinen Polyether. Vorteilhaft ist hier auch die unbegrenzte Mischbarkeit von Polyethern mit Alkylresten C1-2 mit protischen Lösungsmitteln.

Wasser als doppelt protische Substanz ist wie in Beispiel 3 und 4 gezeigt wird, hier als Solvatisierungshiflsmittel ungeeignet, da die enstehenden Solvathüllen nach außen auch polar sind. Somit kommt es vor allem bei nicht vollständig mit protischen Lösemitteln mischbaren Polyethern (z.B. -butylether) zu Löslichkeitsproblemen.

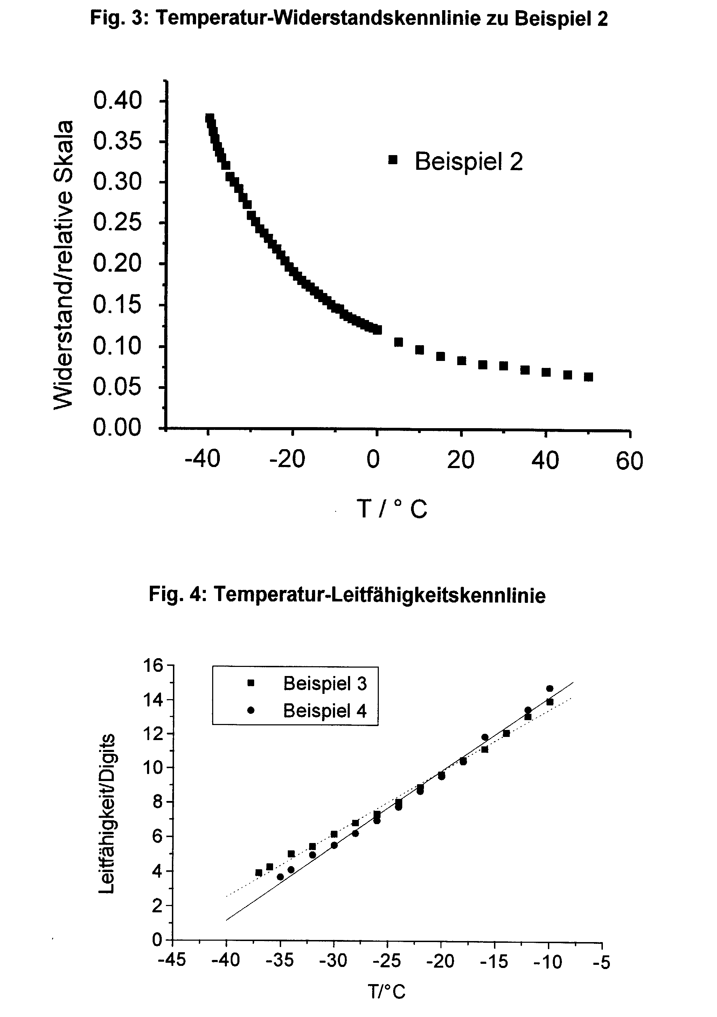

Desweiteren führen Wasserstoffbrückenbindungen zur Erhöhung der Viskosität bei tiefen Temperaturen und damit zu niedrigerer Leitfähigkeit (wie aus Fig.4 ersichtlich ab ca. -20 °C), bzw. zum übermäßigen Ansteigen der Leitfähigkeit bei hohen Temperaturen (z.B. Zugabe von 5 % Wasser zu Bsp. 9 verdoppelt die Leitfähigkeitsänderung zwischen -40 °C und + 85 °C).

Vorteilhaft ist aber der Einsatz von Polyalkoholen (vgl. Beispiel 3 ff.) wie Glykol, Glyzerin, Mannit etc. durch die höheren Komplexbildungskonstanten aufgrund des Chelateffektes und damit besseren Löslichkeiten und Leitfähigkeiten.

Weiterhin lassen sich vorteilhaft im Sinne der Erfindung auch Mischungen aus Polyethem als Elektrolyt verwenden.

Dadurch kommt es zu Siedepunktserhöhungen und Gefrierpunktsemiedrigungen. Somit sinkt die Viskosität dieser Mischungen bei tiefen Temperaturen und die Temperatur/Widerstandskennlinie wird flacher (vgl. Beispiel 5 und 6).

Der erfindungsgemäße Zusatz von OH-funktionellen Verbindungen zur Verbesserung der Löslichkeitseigenschaften läßt sich auch auf andere Lösemittel als die Polyether ausdehnen. Bei, ohne die allgemeine Übertragbarkeit des Erfindungsgedanken auf aprotische Lösungsmittel einschränken zu wollen, z.B Propylencarbonat und 4-Butyrolacton sind damit Schmelzpunktsemiedrigungen und gutes Lösevermögen bei tiefen Temperaturen möglich. Diese Lösungen weisen jedoch vergleichsweise hohe Änderungen der Leitfähigkeit mit die Temperatur auf.

Eine weitere Möglichkeit der Optimierung bietet das Leitsalz. Es existiert eine breite Palette technisch verfügbarer quartärer Ammoniumsalze. Beispiele dafür sind Tetra-n-butylammoniumchlorid, Tetraethylammoniumchlorid, Tetramethylammoniumchlorid, allgemein Tetraalkylammoniumhalogenide. Es gibt noch vielfältige Varianten für Leitsalze, wie aus dem Bereich der Phasentransferkatalyse bekannt (dort ist die Funktion dieser Verbindungen jedoch eine andere; Literatur:E.V. Dehmlow, Phase Transfer Catalysis, 3. Auflage, VCH 1993). Denkbar sind auch Variationen unter Verwendung von Alkalimetallhalogeniden (limitierend ist deren großteils geringe Löslichkeit bei tiefen Temperaturen in Triethylenglykolethern).

Im Sinne der Erfindung ist jedoch eine hohe Leitfähigkeit bei geringem Materialeinsatz, eine möglichst geringe Abhängigkeit der Leitfähigkeit von der Elektrolytviskosität, geringe Kosten (keine "exotischen Chemikalien") und eine möglichst geringe Toxizität. Optimal im Sinne der Erfindung wäre deshalb ein ungiftiges Leitsalz mit geringem Molekulargewicht und guter Löslichkeit im weitem Temperaturbereich. Aus Gründen der Toxizität scheiden deshalb Bromide und Fluoride u.ä. aus. Auch Tetramethylammoniumchlorid mit dem geringstmöglichen Molekulargewicht ist giftig. Nach Stand der Erkenntnis ungiftig ist das homologe Tetraethylammoniumchlorid. Es ist deshalb erfindungsgemäß vorteilhaft einzusetzen. Die geringe Molekülgröße im Vergleich z.B. gegen Tetra-n-butylammoniumchlorid macht die Ladungsträger auch im Elektrolyt mobiler, somit erzielt man höhere molare Leitfähigkeiten.

Dies ist vor allem bei tiefen Temperaturen wichtig, wenn die Elektrolytviskosität zunimmt. Somit erzielt man kleinere Temperatur-LF- Koeffizienten.

Anhand der Beispiele 5,7 und 8 ist gezeigt, daß je nach Etherrest (Länge der Alkylkette) die Temperatur/ Widerstandscharakteristik unterschiedlich ist.

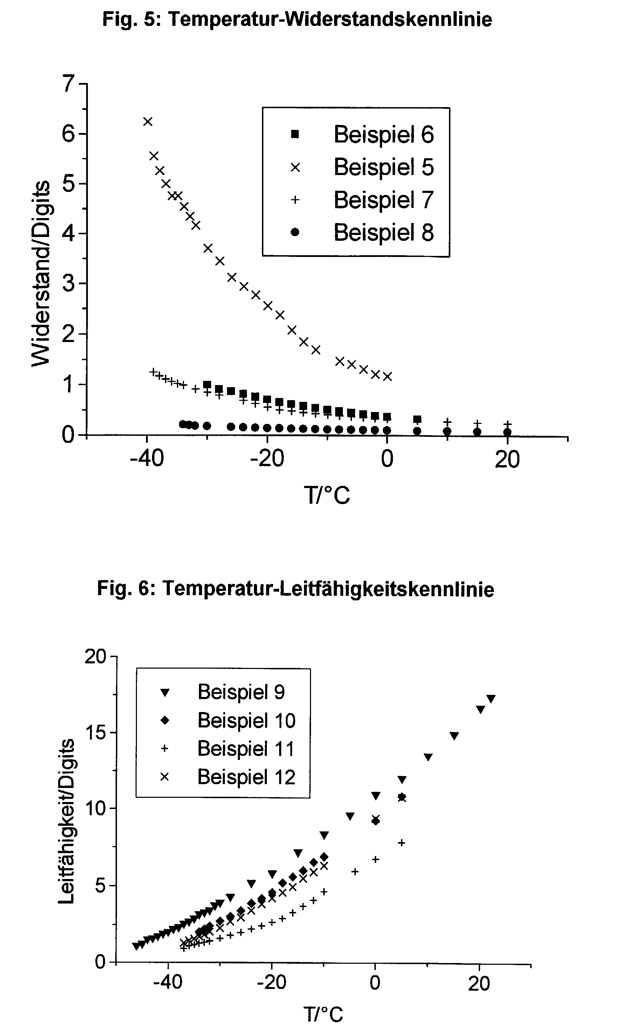

Im allgemeinen sind die Kurven bei kleineren Resten flacher und die Leitfähigkeit ist bei ansonsten gleicher Zusammensetzung der Mischungen höher. Denkbar ist auch der Zusatz von Monoalkylethern (vgl. Tab.1), wie in Beispiel 10-12 aufgeführt. Problematisch ist vermutlich hierbei, daß wegen der OH-Funktionalität der Monoalkylether umsolvatisierungen auftreten können. Diese sind mögliche Ursachen für die gemessenen Unstetigkeiten in den T/LF-Kurven (vgl. Fig. 6, insbesondere Bsp. 11). Desweiteren verschlechtert (vergrößert) sich im allgemeinen die Änderung der Leitfähigkeit mit der Temperatur.

Triethylenglykol ist doppelt OH-funktionell und aufgrund der daraus resultierenden erheblichen Viskositätszunahme (Flüssigkeit stockt bei ca. -25 °C) auch beim Zusatz der Komponenten gemäß Bsp. 9 nicht einsetzbar.

Lösung der Gesamtaufgabe

Bester Weg zur Ausführung der Erfindung und der Anwendung nach Anspruch 1 ist die in Beispiel 9 aufgeführte Mischung. Als lineare aprotische Substanz nach Anspruch 1 wird dabei Triethylenglykoldimethylether eingesetzt, als dissoziationsfähiges Salz nach Anspruch 1 und 3 Tetraethylammoniumchlorid und als Alkohole nach Anspruch 1,2 und 3 Ethylenglykol und Glyzerin.

Diese Mischung ist elektrisch leitfähig von -52 (siehe Fig. 6, Extrapolation von LF auf 0) bis 210 °C (Siedepunkt). Die Leitfähigkeit ist durch die Zugabe von Leitsalz in weitem Rahmen variierbar. Das System ist langfristig stabil, Entmischungen treten nicht auf. Insbesondere ist Triethylenglykoldimethylether gegen elektrochemische Zersetzung vergleichsweise inert. Die Flüssigkeit ist nicht giftig und enthält keine chlorierten Lösemittel.

Der Flammpunkt der Flüssigkeit beträgt 111 °C ist ist somit ausgesprochen hoch. Die Flüssigkeit ist trotz ihres hohen Siedepunktes auch bei tiefen Temperaturen relativ niedrigviskos und besitzt eine geringe Oberflächenspannung ohne daß ihr Tenside zugesetzt werden müssen. Auch alle weiteren Punkte, die in der Problemstellung aufgeführt sind, werden mit einer erfindungsgemäßen Mischung erfüllt. Vorteilhafterweise ist der Schmelzpunkt der Mischung um ca. 7 Grad niedriger als der von reinem Triethylenglykoldimethylether.

Für den Einsatz bei noch tieferen Temperaturen oder wenn ein möglichst niedriger T/LF-Koeffizient erforderlich ist und ein sehr hoher Flammpunkt gleichzeitig nicht erforderlich ist, ist die Zumischung von Diethylenglykoldimethylether nach Anspruch 5 und Ethanol nach Anspruch 1 und 8 angebracht. Je mehr Triethylenglykoldimethylether durch Diethylenglykoldimethylether ersetzt wird (und Glyzerin bzw. Glykol durch Ethanol) um so mehr nähert sich die T/LF-Charakteristik der Kennlinie für Bsp. 8 in Fig. 5.

Eine besondere Ausführungsform ist die Verwendung von in der elektrisch leitfähigen Flüssigkeit löslichen Polymeren zur Einstellung einer gewünschten Viskosität nach Anspruch 11. Dadurch werden vorteilhaft, wenn die Flüssigkeit in einem Sensor nach Anspruch 1 eingesetzt wird, mechanische Eigenschwingungen des Sensors gedämpft.

Denkbar ist hier die Anwendung von Polyvinylalkohol, Alkylcellulosen, Polyethylenimin, Polyacrylamid, Polystyrolsulfonsäuresalzen, Polyvinylpyrrolidon, Reaktionsprodukten von Polyepichlorhydrin mit Chinuclidin oder Trimethylamin etc. Vorteilhaft bei der Verwendung von Polyelektrolyten ist desweiteren eine im Sinne der Erfindung positive Beeinflussung der T/LF-Charakteristik.

Bei besonderen Anforderungen an die chemische oder elektrochemische Stabilität können den Flüssigkeiten Stabilisatorsubstanzen zugefügt werden, wie sie für Ether allgemein bekannt sind.

Beispiele

1) In 100 ml Triethylenglykoldimethylether (> 98 %) werden bei 40 °C 1 g Tetra-n-butylammoniumchlorid gelöst. Die enstandene Lösung weist bei 20 °C eine elektrische Leitfähigkeit von 40 µS/cm auf.

2) Zu 10 g Triethylenglykoldimethylether werden 0,8 g Ethanol wasserfrei und 0,2 g Tetra-n-butylammoniumchlorid zugegeben. Für die Lösung erhält man die in Fig. 3 abgebildete Temperatur-Widerstandskennlinie.

3) Zu 10 g Triethylenglykoldimethylether werden 2,95 g Ethylenglykol, 1 g Diethylenglykoldiethylether und 0,2 g Tetraethylammoniumchlorid zugegeben. Für die Lösung erhält man die in Fig. 4 abgebildete Temperatur-Leitfähigkeitskennlinie (15 Digits = 110 μS/cm).

4) Zu einer Lösung nach Beispiel 3 werden 1,15 g dest. Wasser zugegeben. Für die Lösung erhält man die in Fig. 4 abgebildete Temperatur-Leitfähigkeitskennlinie (15 Digits = 110 μS/cm).

5) Zu 10 g Diethylenglykoldibutylether werden 0,2 g Tetra-n-butylammoniumchlorid und 0,51 g Ethanol wasserfrei zugegeben. Für die Lösung erhält man die in Fig. 5 abgebildete Temperatur-Widerstandskennlinie (1 Digit = 0,1363 μS$^{-1}$ cm).

6) Zu 5 g Diethylenglykoldibutylether werden 5 g Triethylenglykoldimethylether, 0,2 g Tetra-n-butylammoniumchlorid und 0,51 g Ethanol wasserfrei zugegeben. Für die Lösung erhält man die in Fig. 5 abgebildte Temperatur-Widerstandskennlinie (1 Digit = 0,1363 μS$^{-1}$ cm).

7) Zu 10 g Diethylenglykoldiethylether werden 0,2 g Tetra-n-butylammoniumchlorid und 0,52 g Ethanol wasserfrei zugegeben. Für die Lösung erhält man die in Fig. 5 abgebildete Temperatur-Widerstandskennlinie (1 Digit = 0,1363 μS$^{-1}$ cm).

8) Zu 10 g Diethylenglykoldimethylether werden 0,2 g Tetra-n-butylammoniumchlorid und 0,5 g Ethanol wasserfrei zugegeben. Für die Lösung erhält man die in Fig. 5 abgebildete Temperatur-Widerstandskennlinie (1 Digit = 0,1363 μS$^{-1}$ cm).

9) Zu 9,1 g Triethylenglykoldimethylether werden 0,11 g Glycerin, 0,988g Ethylenglykol und 0,071 g Tetraethylammoniumchlorid gegeben. Für die Lösung erhält man die in Figur 6 dargestellte T/LF-Kurve.

10) Zu 3,02 g Triethylenglykolmonoethylether werden 5,99 g Triethylenglykoldimethylether, 0,16 g Glycerin, 0,863 g Ethylenglykol und 0,057 g Tetraethylammoniumchlorid gegeben. Für die Lösung erhält man die in Figur 6 dargestellte T/LF-Kurve.

11) Zu 4,51 g Triethylenglykolmonobutylether werden 4,51 g Triethylenglykoldimethylether, 0,11 g Glycerin, 0,842 g Ethylenglykol und 0,058 g Tetraethylammoniumchlorid gegeben. Für die Lösung erhält man die in Figur 6 dargestellte T/LF-Kurve.

12) Zu 4,55 g Triethylenglykolmonomethylether werden 4,53 g Triethylenglykoldimethylether, 0,10 g Glycerin, 0,862 g Ethylenglykol und 0,057 g Tetraethylammoniumchlorid gegeben. Für die Lösung erhält man die in Figur 6 dargestellte T/LF-Kurve.

13) Zu 5,04 g Wasser werden 5,04 g Ethylenglykol und 0,2 g Tetraethylammoniumchlorid gegeben. Bei - 39 °C frieren aus der Mischung Feststoffe aus. Die Leitfähigkeit nimmt hier sprunghaft ab.

Anwendungsbeispiel

Die in der Erfindung beschriebenen Flüssigkeiten lassen sich z.B. vorteilhaft im Bereich der Sensortechnik überall dort einsetzen, wo beim Einsatz erhebliche Temperaturschwankungen möglich sind, z.B. für Neigungssensoren im Mobilbereich (Diebstahlwarnanlagen, Anzeige der Neigung bei Geländefahrzeugen).

**Patentansprüche**

1. Verfahren zur Messung von Neigungen, Schwingungen, Winkeln, Beschleunigungen und Füllständen durch Eintauchen von Elektroden, die mit einer geeigneten Auswerteelektronik verbunden sind, in eine elektrisch leitfähige Flüssigkeit, dadurch gekennzeichnet, daß die Flüssigkeit aus in einer Phase vorliegenden Mischungen besteht, die mindestens Triethylenglykoldimethylether als Hauptkomponente, eine ein- oder mehrfach OH-funktionelle Verbindung und ein in der Mischung dissoziiertes Salz enthalten.

2. Verfahren nach Anspruch 1, dadurch gekennzeichnet, daß es sich bei der OH- funktionellen Verbindung um Ethylenglykol handelt.

3. Verfahren nach Anspruch 1, dadurch gekennzeichnet, daß die Flüssigkeit Glyzerin enthält.

4. Verfahren nach Anspruch 1, dadurch gekennzeichnet, daß es sich bei dem verwendetem Salz um ein quartäres Ammoniumsalz, insbesondere um Tetraethylammoniumchlorid handelt.

5. Verfahren nach Anspruch 1, dadurch gekennzeichnet, daß die Flüssigkeit weitere lineare Polyether, insbesondere Diethylenglykoldialkylether enthält.

**6.** Verfahren nach Anspruch 1 dadurch gekennzeichnet, daß statt Triethylenglykoldimethylether andere Triethylenglykoldialkylether eingesetzt werden.

**7.** Verfahren nach Anspruch 1 dadurch gekennzeichnet, daß statt Triethylenglykoldialkylether Triethylenglykolmonoalkylether oder Mischungen vorgenannter Mono- und Diether eingesetzt werden.

**8.** Verfahren nach Anspruch 1, dadurch gekennzeichnet, daß sie aliphatische Alkohole, insbesondere Ethanol enthält.

**9.** Verfahren nach Anspruch 1, dadurch gekennzeichnet, daß sie mehrere Alkohole oder Polyalkohole enthält.

**10.** Verfahren nach Anspruch 1, dadurch gekennzeichnet, daß als Salze Alkalimetallhalogenide oder Mischungen davon mit quartären Ammoniumsalzen eingesetzt werden.

**11.** Verafhren nach Anspruch 1, dadurch gekennzeichnet, daß sie zur Einstellung der Viskosität ein in der Flüssigkeit lösliches Polymer, insbesondere einen Polyelektrolyten enthält.

**12.** Verfahren nach Anspruch 1 dadurch gekennzeichnet, daß der Flüssigkeit Stabilisatoren zur Verhinderung der chemischen oder der elektrochemischen Zersetzung zugefügt sind.

## Claims

**1.** A process for measuring inclinations, vibrations, angles, accelerations and filling heights through the immersing of electrodes, which were connected with a suitable electronic for evaluation, in a electric conductive liquid, characterized in that the liquid consists of an one phase mixture, containing at least triethylenglycoldimethylether (as main component), a one or more hydroxyl groups containing substance and a salt dissociated in the mixture.

**2.** A process according to claim 1, characterized in that the hydroxyl funtional substance is ethylene glycole.

**3.** A process according to claim 1, characterized in that the liquid contains glycerine.

**4.** A process according to claim 1, characterized in that the used salt is a quaternary ammonium salt, especially tetraethylammoniumchloride.

**5.** A process according to claim 1, characterized in that the liquid contains further linear polyethers, especially diethylenglykoldialkylethers.

**6.** A process according to claim 1, characterized in that instead of triethylenglykoldimethylether other triethylenglykoldialkylethers are used.

**7.** A process according to claim 1, characterized in that instead triethylenglykoldialkylethers triethylenglykolmonoalkylethers or mixtures of the named mono- and diethers are used.

**8.** A process according to claim 1, characterized in that the liquid contains aliphatic alcohols, especially ethanol.

**9.** A process according to claim 1, characterized in that the liquid contains several alcohols or polyalcohols.

**10.** A process according to claim 1, characterized in that the used salts are alkali metal salts or mixtures thereof with quatemary ammonium salts

**11.** A process according to claim 1, characterized in that for the adjustment of the viscosity the liquid contains a polymer soluble in the liquid, especially a polyelectrolyte.

**12.** A process according to claim 1, characterized in that stabilizers to prevent chemical or electrochemical decomposition are added to the liquid.

**Revendications**

1. Procédé pour la mesurage d' inclinaisons, vibrations, angles, accélérations et hauteurs de remplir par l'immersion des électrodes, qui sont attachées avec une installation électronique, dans une liquide conductive pour l'électricité charactérisé en ce que la liquide est composée au moins de triéthyleneglycolediméthyléther, une substance contenant une ou plusieurs fonctions d' hydroxides et un sel dissociable dans la mixture.

2. Procédé selon la revendication 1, charactérisé en ce que la substance contenant une ou plusieurs fonctions d' hydroxides est glycole d'éthylène.

3. Procédé selon la revendication 1, charactérisé en ce que la liquide contient glycérine.

4. Procédé selon la revendication 1, charactérisé en ce que le sel utilisé est un sel d' ammonium quaternaire, particulièrement chlorure de tetraéthylammonium.

5. Procédé selon la revendication 1, charactérisé en ce que la liquide contient en outre de linéaire polyéther, particulièrement de diéthyleneglycoledialkyléther.

6. Procédé selon la revendication 1, charactérisé en ce qu'au lieu de triéthyleneglycolediméthyléther d'autres triéthyleneglycoledialkyléthers sont utilisés.

7. Procédé selon la revendication 1, charactérisé en ce qu'au lieu de triéthyleneglycoledialkyléthers des triéthyleneglycolemonoalkyléthers ou des mixtures du mono ou di éthers correspondants sont utilisés.

8. Procédé selon la revendication 1, charactérisé en ce que la liquide contient des alcools aliphatiques, particulièrement éthanol.

9. Procédé selon la revendication 1, charactérisé en ce que la liquide contient plusieurs alcools ou polyalcools.

10. Procédé selon la revendication 1, charactérisé en ce que les sels sont des halogènides alkalins ou des mixtures de ceux ci avec des sel d' ammonium quaternaires.

11. Procédé selon la revendication 1, charactérisé en ce que la liquide contient, pour ajuster la viscosité, un polymer soluble dans la liquide, particulièrement un polyélectrolyte.

12. Procédé selon la revendication 1, charactérisé en ce que des stabilisateurs sont ajoutés à la liquide pour empêcher la décomposition chimique ou électrochimique.

**Fig. 1: Neigungsschalter**

Elektrode 1

Hohlkörper

Elektrisch
leitfähige
Flüssigkeit

Elektrode 2

**Fig. 2: Temperatur-Viskositätsverhalten von Flüssigkeiten**

## Fig. 3: Temperatur-Widerstandskennlinie zu Beispiel 2

## Fig. 4: Temperatur-Leitfähigkeitskennlinie

## Fig. 5: Temperatur-Widerstandskennlinie

## Fig. 6: Temperatur-Leitfähigkeitskennlinie